# EUROPÄISCHE PATENTANMELDUNG

(11) **EP 0 845 604 A2**
(43) Veröffentlichungstag der Anmeldung: **03.06.1998**
(21) Anmeldenummer: 97250198.5
(22) Anmeldetag: 26.06.1997
(51) Int. Cl.: F16B 5/00

(54) **Bauteilverbindung für Flächenstrukturen, insbesondere Fahrzeugsegmente**

(30) Priorität: 27.11.1996 DE 19650849
(71) Anmelder: Deutsche Waggonbau AG, 12526 Berlin (DE)
(72) Erfinder: Dengler, Markus, Dipl.-Ing., 88682 Salem (DE); Windszus, René, 06124 Halle (DE); Friedrich, Mario, Dipl.-Ing., 10365 Berlin (DE)

(57) **Zusammenfassung**

Bauteilverbindung für Flächenstrukturen, insbesondere Fahrzeugsegmente mit linienförmigen Verbindungen der Bauteile untereinander aus auch unterschiedlichen Werkstoffkombinationen mit großen Fertigungstoleranzen der zu verbindenden Bauteile, die mittels bekannter Verfahren, wie Innenhochdruckumformen, Verfahren unter Anwendung des Formgedächtniseffektes u.a. gebildet werden, wobei diese Verbindungen einfach herstellbar sind, geringe Massenanhäufungen im Fügebereich aufweisen, formschlüssig und lasttragend ausgebildet, funktionssicher und überwiegend druckdicht gefügt sind in der Art, daß die Ränder beliebig gestalteter vorgerüsteter Baugruppen (1,2) als profilierte miteinander korrespondierende Steckverbindungen (3) ausgebildet sind, die im gefügten Zustand einen Hohlraum (8) zur Aufnahme eines hydraulisch, pneumatisch oder mit anderen druckaufbauenden oder aufschäumenden Medien beaufschlagten flexiblen oder plastisch verformbaren rohrförmigen Fügekörper (4) bilden. Die Erfindung findet besondere Anwendung im Fahrzeugbau.

## Beschreibung

Die Erfindung bezieht sich auf Bauteilverbindungen für das linienförmige Zusammenfügen von Flächenstrukturen gemäß Oberbegriff des Patentanspruches 1.

Um den Richt- und Fügeaufwand und somit die Kosten von großen Strukturen wie z.B. Rohbauwagenkästen von Schienenfahrzeugen, Schiffsrümpfen in Grenzen zu halten, sind Hersteller solcher Erzeugnisse daran interessiert, auf das Schweißen als Fügetechnik zu verzichten. Eine Alternative hierzu sind bekannte Kaltfügeverfahren. Durch die Anwendung dieser Verfahren können vormontierte Baugruppen inklusive Innenausstattungen und Aufbauten zu einem Fahrzeug zusammengefügt werden. Die zur Anwendung kommenden bekannten Kaltfügefahren sind Kleben, Nieten, Bolzen/Schrauben, Klemmen/Einschnappen, Kaltpreßschweißen und das Rohraufdornverfahren. Das Kaltpreßschweißen findet nur bei Bauteilen begrenzter Abmessungen Anwendung. Hierbei werden zwei Bauteile gefügt, wobei eines mit einer Nut und das andere mit einer in diese Nut passenden Fortsatz versehen ist. Nut und Fortsatz sind als Presspassung ausgeführt. Das Fügen geschieht üblicherweise mit hydraulischen Pressen. Beim Fügevorgang findet zwischen den zu verbindenden Teilen eine Kaltverschweißung statt. Im Schienenfahrzeugbau ist der Zugang zu den einzelnen Fügestellen technologisch bedingt erschwert, was oftmals den Einsatz hydraulischer Pressen nicht zuläßt. Beim Rohraufdornverfahren werden zwei Profile ineinander geklemmt. Die Fixierung geschieht mittels eines Rohres. Dieses wird bleibend durch einen konusförmigen Dorn aufgeweitet. Nachteilig bei dieser Fügung sind die Masseanhäufungen im Fügebereich, die Kerbwirkung, die einzuhaltenden engen Toleranzbereiche sowie die hohe Fehlerquote bei der Fertigung. Bei dem bekannten Innenhochdruckverformen wird ein volumenartiges Werkstück innerhalb einer stabilen Form mittels eines in diesem Werkstück anliegenden Innenüberdruckes aufgeweitet, bis es die Innenkonturen der stabilen Form angenommem hat. Während des Aufweitens wird das Werkstück plastisch verformt, wobei ein Ausdünnen der Wandquerschnitte erfolgt. Art und Umfang sind von dem Größenverhältnis der ursprünglichen zur endgültigen Werkstückgröße abhängig. Die notwendigen Prozeßdrücke sind von dem Werkstoff und den Anfangs- und Endgeometrien der Werkstücke abhängig. Sie liegen üblicherweise im Bereich von 10 bis 80 Mpa. Der gesamte Umformvorgang ist gut regelbar. Ein Beispiel für diese bekannten Verfahren ist in der DE 44 06 726 A1 beschrieben. Durch gesteuertes Aufbringen von Druck auf die Innenflächen eines Innenrohres wird zuerst das Innenrohr plastisch verformt und aufgeweitet, wobei das Außenrohr bei weiterem Innendruckanstieg elastisch aufgeweitet wird und nach Druckentlastung ein Haftdruck zwischen beiden Rohren verbleibt, der der verhinderten Rückverformung aus der Differenz der elastischen Rückverformungen der beiden Rohre in tangentialer Richtung entspricht. Bei dieser Erfindung ist ein spezifischer Rohraufbau, in diesem Fall aus zwei Rohren bestehend, angestrebt. Dieses bekannte Verfahren und die Rohrausbildung sind nicht geeignet für die Realisierung linienförmiger Bauteilverbindungen. Eine andere punktuelle Rohrverbindung mit den gleichen Einschränkungen ist in der DE 40 29 670 C2 beschrieben. Ein Innenrohr paßt sich durch allseitige hydrostatische Aufweitung an einen äußeren Rohrkörper an und verbindet in einem gesondertem Bereich beide Teile mittels einer blasenförmigen Ausweitung des Innenteiles in dem offenen Rohrendenbereich kraftschlüssig. Auch diese konstruktive Ausbildung ist für die Anwendung bei linienförmigen Bauteilverbindungen großer Flächenstrukturen nicht geeignet. Weiterhin ist die Anwendung von Memorylegierungen bekannt. Der Memory-/Formgedächtniseffekt ist eine werkstoffspezifische Eigenschaft, bei deren Anwendung eine reversible hysteresebehaftete Verformung stattfindet und durch eine Änderung der Umgebungstemperatur bzw. durch Einwirkung äußerer und innerer Spannungen ausgelöst wird. Ein beliebiger Querschnitt wird bekannterweise unterhalb eines kritischen Verformungsgrades innerhalb einer unterkühlten Phase bleibend verformt und bei Erwärmung um wenige Grade Celsius geht diese Verformung nahezu vollständig zurück. Anwendbare Vorschläge für die Anwendung bei linienförmigen Bauteilverbindungen für Flächenstrukturen sind nicht bekannt.
Aufgabe der Erfindung ist es, linienförmige Bauteilverbindungen unterschiedlicher Werkstoffkombinationen für Flächenstrukturen mit großen Fertigungstoleranzen, insbesondere für Fahrzeugsegmente zu schaffen, die mittels bekannter Verfahren, wie Innenhochdruckumformen, Verfahren unter Anwendung des Formgedächtniseffektes und unter Anwendung des Bimetalleffektes gefügt werden, wobei diese Verbindungen einfach herstellbar sind, geringe Massenanhäufungen im Fügebereich aufweisen, formschlüssig und lasttragend ausgebildet, funktionssicher und überwiegend druckdicht gefügt sind und teilweise bei Bedarf gelöst werden können.
Die Aufgabe wird erfindungsgemäß mit den Merkmalen des Patentanspruches 1 gelöst. Weiterbildungen des Erfindungsgegenstandes gehen aus den Unteransprüchen hervor.
Die Vorteile der erfindungsgemäßen Bauteilverbindungen bestehen darin, daß:
- Momente in Profilumfangsrichtung übertragen werden können,
- je nach Gestaltung der Fügestelle formschlüssige Verbindungen entstehen,
- eine hohe Prozeßsicherheit erreicht wird,
- große Bauteiltoleranzen überbrückt werden können,
- ein Ausrichten der Bauteile erreicht wird,
- Bauteile aus unterschiedlichen Werkstoffen gefügt werden können,
- bei Anwendung der Memorymetall-Lösung eine einfache lösbare Verbindung entsteht,
- die Verbindungen und ihre Fügung besonders für Rohbauten aus Aluminiumstrangpreßprofilen geeignet sind, wobei die Fügestellen in Längsrichtung der Profile liegen,
- innerhalb der erfindungsgemäß ausgebildeten Großbaugruppen bekannte Fügetechniken angewendet werden können.

Ausführungsbeispiele der Erfindung sollen anhand der Zeichnungen näher erläutert werden. Die Zeichnungen zeigen in:
- Fig.1:: einen Wagenkasten mit nicht verbundenen Segmenten,
- Fig.2:: einen Querschnit durch den Wagenkasten nach Fig.1,
- Fig.3:: Einzelheit Z nach Fig.2,
- Fig.4:: die Ausbildung der profilierten Steckverbindung zweier getrennter Segmente,
- Fig.5:: die Ausbildung zweier gefügter Steckverbindungen mit eingelegtem Fügekörper,
- Fig.6:: die gefügten Steckverbindungen mit zum Teilaufgeblähtem Fügekörper
- Fig.7:: die gefügten Steckverbindungen mit vollständig ausgeformten Fügekörper,
- Fig.8:: eine weitere Ausführungsform der Steckverbindung mit einer weiteren Ausführungsform eines Fügekörpers als Verriegelungselement,
- Fig.9,: der Fügekörper als Verriegelungselement in geschlossener Stellung,
- Fig.10:: der Fügekörper als Verriegelungselement in geöffneter Stellung,
- Fig.11:: Bauteile mit profilierter Steckverbindung und einem Fügekörper mit daran befindlichem Klebstoff,
- Fig.12:: geschlossener Fügekörper,
- Fig.13:: offenes Verriegelungselement.

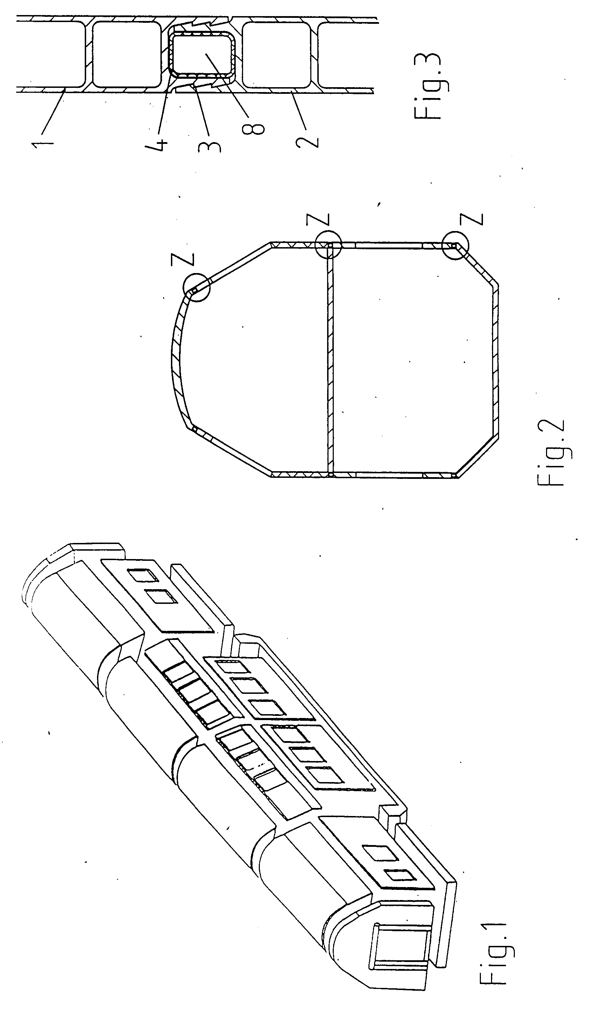

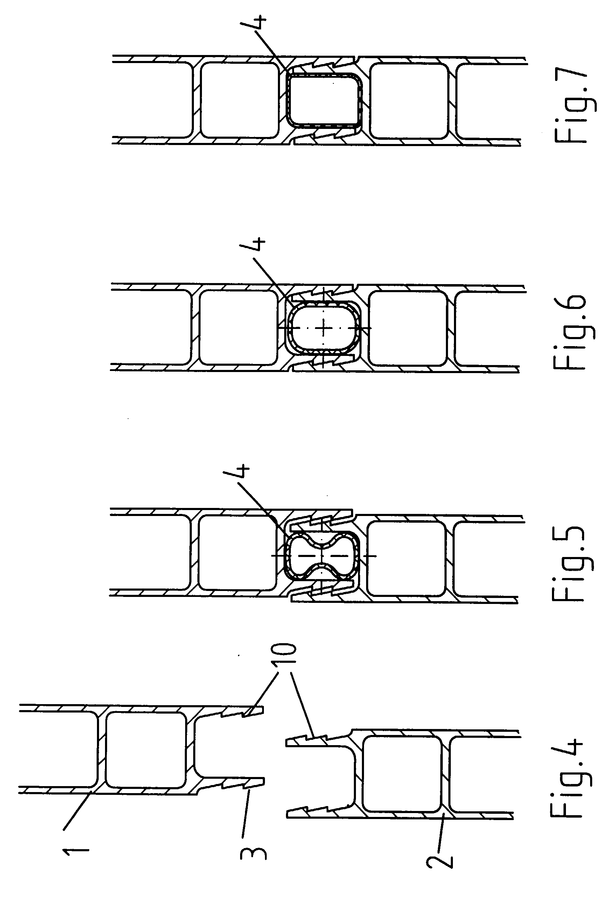

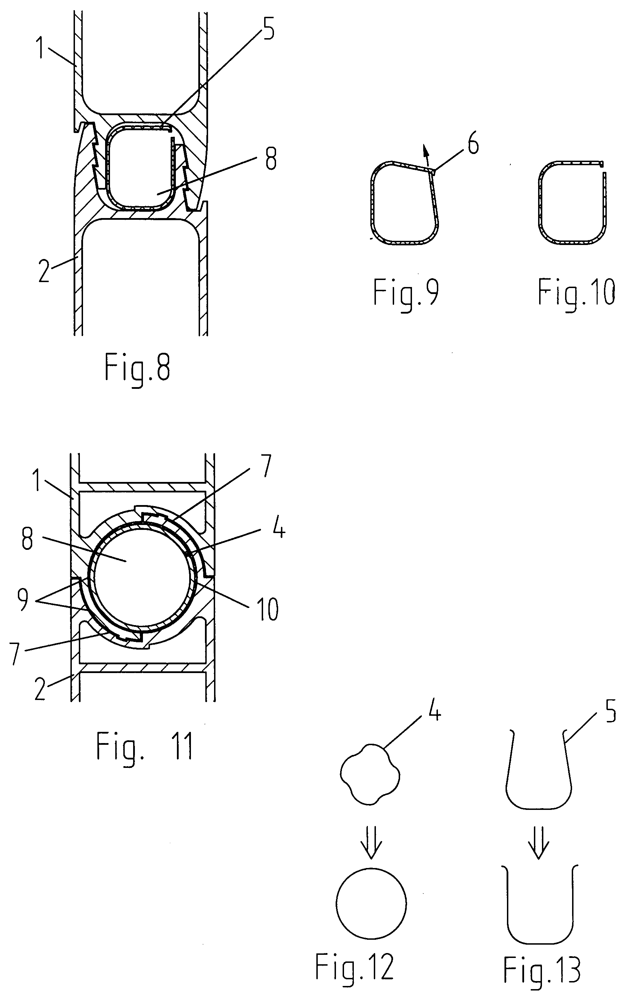

Die in Fig. 1 und 2 vorgerüsteten Baugruppen 1 und 2 werden in Längsrichtung an den jeweiligen Rändern miteinander verbunden. Dabei werden die Ränder zweier miteinander zu fügender Bauteile 1 und 2 gemäß Fig.3 so mit ihren profilierten Steckverbindungen 3 ausgebildet, daß sie im zusammengesteckten Zustand miteineinder korrespondieren. Die Anlageflächen der profilierten Steckverbindungen 3 können dabei, wie in Fig.3 bis 7 dargestellt, zackenförmige Vorsprünge aufweisen, die beim Zusammenfügen ineinander greifen und sich dabei festhaken. In einem so gebildeten Hohlraum 8 ist ein rohrförmiger Fügekörper 4 angeordnet, der mit einem Innendruck beaufschlagt wird und somit eine kraft- und/oder formschlüssige Verbindung der Bauteile 1 und 2 herstellt. Der Fügekörper 4 kann als geschlossener Verriegelungsquerschnitt mit kreisförmigen bzw. nach Fig. 12 mit vorgeformten Faltungen, deren Anzahl und Form beliebig gewählt werden kann, ausgebildet sein. Nach Fig. 13 können auch offene Verriegelungselemente 5 aus Memory- oder Bimetallen ausgeführt werden. Es ist im Sinne der Erfindung, die Füge- bzw. Kontaktflächen 10 aufzurauhen und/oder teilweise einzuschneiden bzw. mit einer Oberflächentextur zu versehen, die ein besseres Kontaktieren der Berührungsflächen bewirken. Die Berührungsflächen können auch mit Klebstoff 9 bestrichen sein, wobei ein Verbleiben des Fügekörpers 4 nicht mehr zwingend notwendig ist. Die in den Zeichnungen dargestellten Verzahnungen können ebenso keilförmiger, rechteckiger Art sein. Die für das Anpressen des Fügekörper 4 notwendige Kraft im Hohlraum 8 zwischen den profilierten Steckverbindungen 3 der Bauteile 1 und 2 wird durch das hydraulische, pneumatische, explosive Aufblasen des dünnwandigen Fügekörpers 4 beliebigen Querschnitts oder durch Aufschäumen eines Mediums oder mittels eines Verriegelungselementes 5 erzeugt. Der Fügekörper 4 wird dabei bleibend plastisch verformt. Die nach dem Verformen verbleibende elastische Restanpreßkraft des Fügeelementquerschnittes an den Bauteilen 1 und 2 muß so groß gewählt sein, daß ein Lösen der Verbindung bei betrieblichen Beanspruchungen ausgeschlossen ist. Dies kann mittels des maximalen Prozeßinnendruckes in mechanisch sinnvollen Grenzen bzw. mit entsprechendem Fügekörper 4 und seines Werkstoffes variiert werden. Das Verriegelungselement 5 nach Fig.8 bis 10 aus Memory-/Bimetall kann seine Gestalt schlagartig-irreversibel/reversibel ändern. Dieses wird durch einen nasenartigen Fortsatz 6 erreicht. Dieser Fortsatz 6 hält das Verriegelungselement 5 bis zu einer bestimmten Temperatur bzw. Druck geschlossen und erst danach springt das Verriegelungselement 5 schlagartig auf und preßt die Bauteile 1 und 2 aneinander. Gemäß Fig. 11 sind die Bauteile 1 und 2 mit profilierten Steckverbindungen 7 ausgestattet. Die Kontaktflächen 10 des Fügekörpers 4 und der profilierten Steckverbindungen 7 sind mit Klebstoff 9 bestrichen und werden mittels Innendruck im Fügekörper 4 bis zum Aushärten aneinander gedrückt. Der Klebstoff 9 kann ausschließlich oder unterstützend zur genannten Fügung verwendet werden. Eine weitere Ausführungsform sieht vor, daß die profilierten Steckverbindungen 7 dicht angeordnet sind und im Hohlraum 8 Klebstoff 9 vorgesehen ist, der bis zum Aushärten durch Innendruck an die Innenwandung des Verbindungshohlraumes angepreßt wird.

### Aufstellung der verwendeten Bezugsseichen

- 1: Bauteil
- 2: Bauteil
- 3: Steckverbindung
- 4: Fügekörper
- 5: Verriegelungselement
- 6: Fortsatz
- 7: Steckverbindung
- 8: Hohlraum
- 9: Klebstoff
- 10: Kontaktfläche

## Patentansprüche

1. Bauteilverbindung für Flächenstrukturen, insbesondere Fahrzeugsegmente, bei denen die Segmentenden mit Verbindungselementen versehen sind, dadurch gekennzeichnet, daß die Ränder beliebig gestalteter vorgerüsteter Baugruppen (1 und 2) als profilierte miteinander korrespondierende Steckverbindungen (3 bzw. 7) gestaltet sind, die im gefügten Zustand einen Hohlraum (8) zur Aufnahme eines hydraulisch, pneumatisch oder mit anderen druckaufbauenden oder aufschäumenden Medien beaufschlagten flexiblen oder plastisch verformbaren rohrförmigen Fügekörper (4) bilden.

2. Bauteilverbindung nach Anspruch 1, dadurch gekennzeichnet, daß die Hohlräume (8) mit Verriegelungselementen (5) aus Memory-/Bimetall versehen sind.

3. Bauteilverbindung nach Anspruch 2, dadurch gekennzeichnet, daß die aus Memory-/Bimetall bestehenden Verriegelungselemente (5) mit nasenartigen Fortsätzen (6) versehen sind.

4. Bauteilverbindung nach Anspruch 1, dadurch gekennzeichnet, daß die profilierten Steckverbindungen (3) mit aufgerauhten und/oder teilweise eingeschnittenen Oberflächen versehen sind, die mittels Verriegelungselement (5) oder Fügekörper (4) zum Eingriff kommen und dabei eine Kraft und/oder formschlüssige Verbindung darstellen.

5. Bauteilverbindung nach Anspruch 4, dadurch gekennzeichnet, daß die profilierten Steckverbindungen (3) mit Oberflächentexturen oder mit Verzahnungen keilförmiger oder rechteckiger Art oder beides versehen sind.

6. Bauteilverbindung nach Anspruch 5, dadurch gekennzeichnet, daß die profilierten Steckverbindungen (3) an den Kontaktflächen (10) mit Klebstoff (9) versehen sind und mittels Innendruck im rohrförmigen Fügekörper (4) bis zur Aushärtung des Klebstoffs (9) verpreßt werden.

7. Bauteilverbindung nach Anspruch 6, dadurch gekennzeichnet, daß die profilierten Steckverbindungen (7) als hydraulisch/pneumatisch dichte Verbindungen ausgeführt und die vorhandenen, mit Klebstoff (9) benetzten Hohlräume (8) bis zur Aushärtung mit einem Innendruck beaufschlagt werden.

8. Bauteilverbindung nach Anspruch 6 und 7, dadurch gekennzeichnet, daß ein aushärtender und sich ausdehnender Klebstoff (9) einen Innendruck in dem Hohlraum (8) erzeugt.
